# EUROPEAN PATENT APPLICATION

(11) **EP 0 754 405 A1**
(43) Date of publication of application: **22.01.1997**
(21) Application number: 95111634.2
(22) Date of filing: 21.07.1995
(51) Int. Cl.: A01K 5/00, A01F 29/00

(54) **Improved machine for shredding and mixing fibrous products for technical use in zoo**

(71) Applicant: Faccia, Tiziano, I-35023 Bagnoli di Sopra (Padova) (IT)
(72) Inventor: Faccia, Tiziano, I-35023 Bagnoli di Sopra (Padova) (IT)
(74) Representative: Modiano, Guido, Dr.-Ing.

(57) **Abstract**

The present invention relates to an improved machine for shredding and mixing fibrous products for zootechny. The machine comprises, on a towed or self-propelled wheeled chassis, a container (12) that is substantially shaped like an inverted truncated cone and is internally provided with at least one vertical shredding and mixing scroll and, on the wall, with a discharge outlet (16). The machine is characterized in that it comprises, in front of the discharge outlet (16), rotating removal and discharge elements (29) that are rigidly coupled to a common motorized rotation axis movable on a supporting structure (17). The axis is associated with actuation means adapted to move the rotating elements (29) between a position that lies outside the container (12) and a position that lies at least partially inside it.

## Description

The present invention relates to an improved machine for shredding and mixing fibrous products for zootechnical use.

Machines for shredding and mixing fibrous products, such as hay and/or straw, to be used to feed the cattle, are currently used in zootechny.

These fibrous products are generally mixed with protein integrators, floury components, and silage.

One of these machines is substantially constituted by a towed or self-propelled wheeled chassis that supports a container shaped substantially like an inverted truncated cone and internally provided with at least one vertical scroll that is peripherally provided with cutters and adapted for shredding and mixing.

This scroll has a particular shape, since it is helical with an external profile that lies along an ideal conical surface.

The machine is furthermore provided, on the wall of the container, in a lower region, with a discharge outlet that is controlled by means of a movable gate and below which a conveyor belt, adapted to convey the product towards the troughs, is generally located.

Although they have been used and particularly appreciated for several years by their users, these machines are not devoid from drawbacks, one of which is observed in particular when the fodder for the cattle is based on particularly fibrous products.

In such cases, the fodder is discharged with great difficulty and the simple rotary action of the scroll and the opening of the discharge are insufficient.

The fibers in fact tend to cling to the container, blocking the gate and thus flowing out non-uniformly.

This of course causes non-uniform trough filling and increases discharge times.

A principal aim of the present invention is therefore to eliminate the drawback described above in known types of machine for shredding and mixing fibrous products for zootechnical use, in order to allow continuous and gradual discharge of the fodder at the end of its processing.

Within the scope of the above aim, a consequent primary object is to provide a machine that is optimum in operation for all operating conditions and for the entire range of materials used for feeding the cattle.

Another object is to provide a machine that is particularly safe and reliable in use.

This aim, these objects, and others which will become apparent hereinafter are achieved by an improved machine for shredding and mixing fibrous products for zootechnical use, of the type comprising, on a towed or self-propelled wheeled chassis, a container that is substantially shaped like an inverted truncated cone and is internally provided with at least one vertical shredding and mixing scroll and, on the wall, with a discharge outlet, characterized in that it comprises, in front of said discharge outlet, rotating removal and discharge elements rigidly coupled to a common motorized rotation axis that is movable on a supporting structure and is associated with actuation means adapted to move said rotating elements between a position that lies outside said container and a position that lies at least partially inside it.

Further characteristics and advantages of the invention will become apparent from the detailed description of an embodiment thereof, illustrated only by way of non-limitative example in the accompanying drawings, wherein:
figure 1 is a side view of a towed machine for shredding and mixing fibrous products for zootechnical use;
figure 2 is an enlarged-scale longitudinal sectional detail view, taken along a vertical plane, of the front part of the machine of figure 1;
figure 3 is an enlarged-scale top sectional view, taken along a horizontal plane, of the front part of the machine of figure 1;
figure 4 is an enlarged-scale sectional front detail view, taken along a vertical plane, of the front part of the machine of figure 1;
figure 5 is a perspective view of means for removing and discharging the processed product that are provided in the machine of figure 1.

With reference to the above figures, a towed machine for shredding and mixing fibrous products for zootechnical use comprises a chassis 10, with two wheels 11, that supports a container 12 substantially shaped like an inverted truncated cone and internally provided, in this case, with a vertical shredding and mixing scroll 13.

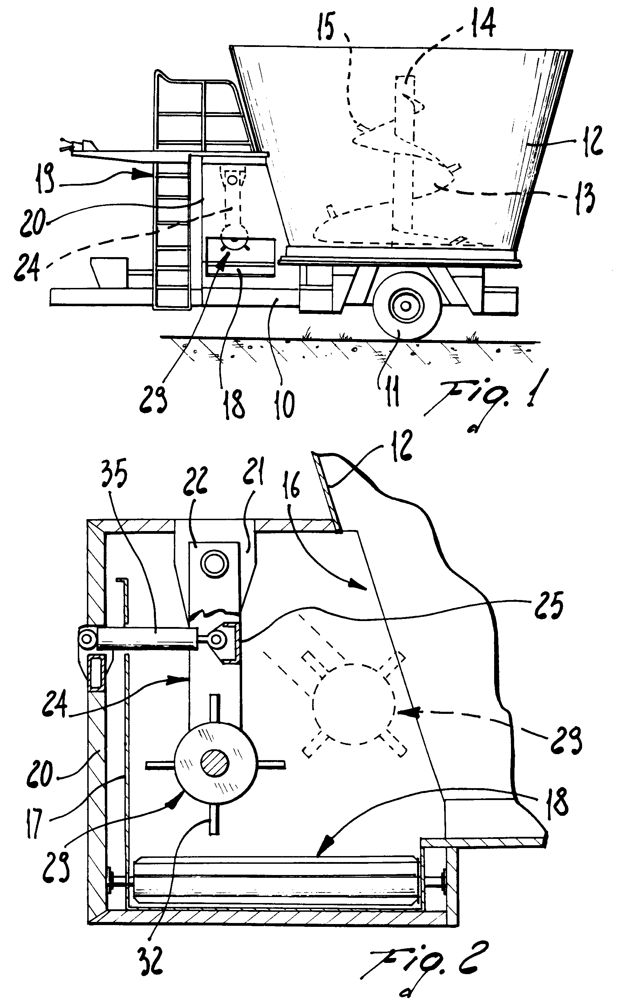

As shown in figure 1, the scroll 13, which is connected to a central shaft 14, is substantially constituted by a spiral made of metal plate the profile whereof lies on an ideal conical surface.

The scroll 13 is peripherally provided with shredding cutters 15.

A discharge outlet 16 is provided in the front lower part of the wall of the container 12 and is provided with a control gate, not shown in the figures, and with a conveyor belt 18 on the outside, below said gate; said belt is supported by a structure 17 of said gate and is bidirectional in this case, but can anyhow also be conveniently unidirectional.

In front of the outlet 16, between the container 12 and the ladder 19 with an inspection platform, there is a box-like structure 20 that also contains the structure 17 and the belt 18 and is open at the discharge regions thereof.

Respective plates 21 are bolted on the upper part of the box-like structure 20 in oppositely arranged positions of the side walls; arms 24 are articulated to said plates with first ends 22 by virtue of bearing systems 23 and extend downwardly and are joined by a cross-member 25 constituted by a C-shaped profile welded to said arms at its ends.

Of course, since the arms 24 are arranged outside the box-like structure 20, the side walls of the box-like structure 20 are open to allow the movements of the cross-member 25.

A roller 29 is rotatably coupled to the second ends 26 of the arms 24 by means of bearing systems 27 at end pivots 28; said roller is constituted by a tubular metallic element 30 that is closed at its ends by heads 31 that are welded thereto.

The roller 29 is arranged below the cross-member 25 and frontally with respect to the discharge outlet 16 of the container 12.

It should be noted that radial rod-like protrusions 32 extend from the rolling surface of the roller 29; in the specific case, they are the ends of rod-like elements 33 that pass diametrically through the tubular metallic element 30 and are fixed thereto for example by welding.

The protrusions 32 are arranged in mutually offset rows.

The roller 29 is motorized by means of a hydraulic motor 34 that is fixed to one of the second ends 26 of a corresponding plate 21 and is connected to an end pivot 28.

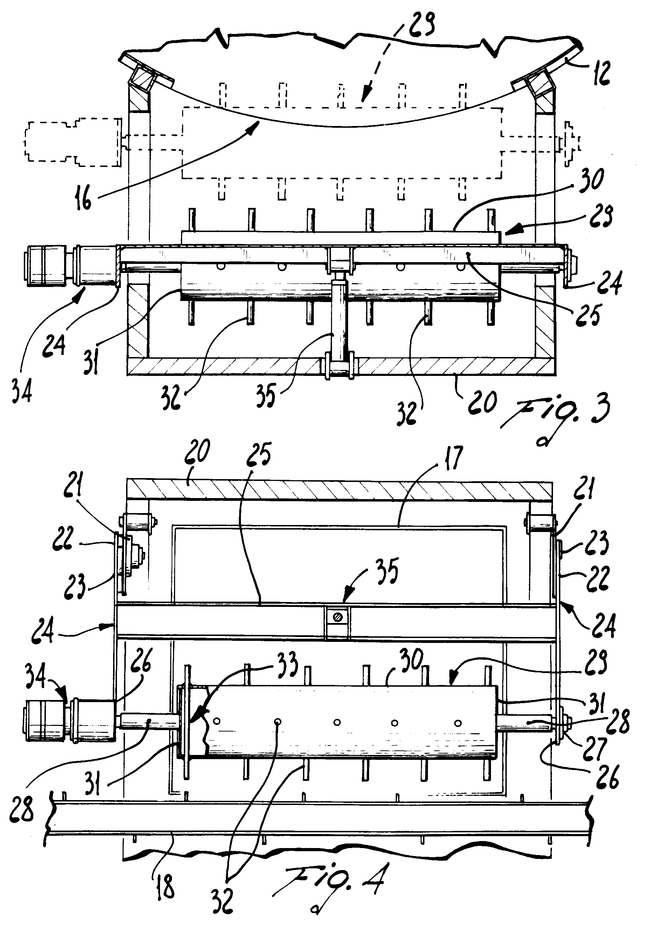

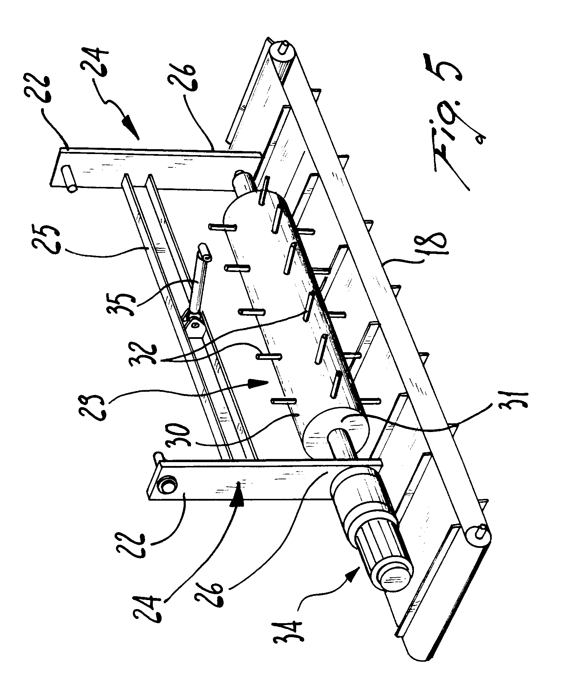

A hydraulic cylinder 35 is rigidly coupled between the box-like structure 20 and the cross-member 25 and actuates the articulation of the arms 24 between two positions which, as shown in figures 2 and 3, correspond to a position in which the roller 29 lies entirely outside the container 12 and to a position in which said roller lies partially inside through the discharge outlet 16.

As shown in figure 3, penetration inside the container 12 is facilitated by the curvature of its wall.

From the figures it is evident that the described machine, in comparison with known types, and by virtue of the motorized roller 29, can remove the processed material directly from the inside of the container 12, discharging it onto the conveyor belt 18.

This is done when particularly fibrous material, which encounters extreme difficulty in being discharged outside, is present inside the container 12.

The motorized roller 29 therefore has the auxiliary function of facilitating the discharge of the fodder, making it uniform and constant in time and therefore shortening the duration of the entire operation.

Of course, the fact that the motorized roller 29 is movable between an operating position and a standby position makes the machine equally adapted for processing material that is not particularly fibrous and difficult to discharge.

In practice it has been observed that the intended aim and objects of the present invention have been achieved.

The invention thus conceived is susceptible of numerous modifications and variations, all of which are within the scope of the inventive concept.

Thus, for example, the discharge outlet, and therefore the motorized roller, can be provided in the rear part of the machine and discharge can be performed without a conveyor belt.

All the details may furthermore be replaced with other technically equivalent elements.

As mentioned, the machine can also be self-propelled.

In practice, the materials employed, so long as they are compatible with the contingent use, as well as the dimensions, may be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Improved machine for shredding and mixing fibrous products for zootechnical use, or the type comprising, on a towed or self-propelled chassis (10) with wheels (11), a container (12) that is substantially shaped like an inverted truncated cone and is internally provided with at least one vertical shredding and mixing scroll (13) and, on the wall, with a discharge outlet (16); characterized in that it comprises, in front of said discharge outlet (16), rotating removal and discharge elements (29, 33) that are rigidly coupled to a common motorized rotation axis that is movable on a supporting structure (17) and is associated with actuation means adapted to move said rotating elements between a position that lies outside said container and a position that lies at least partially inside it.

2. Machine according to claim 1, characterized in that said rotating elements are constituted by rod-like protrusions (33) that extend radially from a motorized roller (29) movable on said supporting structure (16).

3. Machine according to one or more of the preceding claims, characterized in that said roller (29) is rotatably coupled, at its ends, to arms (24) that are articulated to said supporting structure (16), said arms being joined by a cross-member (25).

4. Machine according to one or more of the preceding claims, characterized in that said supporting structure (17) is a box-like structure (20) that is arranged in front of said discharge outlet (16) and supports said arms (24) so that they are articulated thereto.

5. Machine according to one or more of the preceding claims, characterized in that said box-like supporting structure (20) at least partially contains a discharge conveyor belt (18) arranged below said motorized roller (29).

6. Machine according to one or more of the preceding claims, characterized in that said actuation means are constituted by a hydraulic cylinder (35) that is rigidly coupled between said cross-member (25) and said supporting structure (17) and actuates the articulation of said arms (24) so as to move said roller (29) between a position that lies outside said container (12) and an at least partially internal position.

7. Machine according to one or more of the preceding claims, characterized in that said roller (29) is motorized with a hydraulic motor (34) that is fixed to a corresponding one of said arms.

8. Machine according to one or more of the preceding claims, characterized in that said roller (29) is constituted by a tubular metallic element (30) with end heads (31) and rotation pivots (28) extending from said heads, said rod-like protrusions (33) being the ends of rods that pass diametrically through said roller in adapted holes and are fixed thereto.
